**Europäisches Patentamt**

**European Patent Office**

**Office européen des brevets**

(19)

(11) Veröffentlichungsnummer: **0 058 405**
**B1**

(12) # EUROPÄISCHE PATENTSCHRIFT

(45) Veröffentlichungstag der Patentschrift:
**22.05.85**

(51) Int. Cl.⁴: **B 23 B 49/02**

(21) Anmeldenummer: **82101028.7**

(22) Anmeldetag: **11.02.82**

(54) **Verfahren zur Anbringung eines Gegenstandes an einer Wand mittels wenigstens eines Halters und an einer Wand zu befestigender Gegenstand mit Befestigungslöcher aufweisenden Haltern.**

(30) Priorität: **13.02.81 DE 3105347**
**13.02.81 DE 3105354**

(43) Veröffentlichungstag der Anmeldung:
**25.08.82 Patentblatt 82/34**

(45) Bekanntmachung des Hinweises auf die Patenterteilung:
**22.05.85 Patentblatt 85/21**

(84) Benannte Vertragsstaaten:
**BE FR GB IT LU NL**

(56) Entgegenhaltungen:
**DE - A - 1 429 768**
**DE - U - 1 674 786**
**DE - U - 7 711 678**
**US - A - 2 355 835**
**US - A - 3 526 947**

(73) Patentinhaber: **Wilke, Rudolf, Marsberger Strasse 2,**
**D-3548 Arolsen (DE)**

(72) Erfinder: **Wilke, Rudolf, Marsberger Strasse 2,**
**D-3548 Arolsen (DE)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund, B.Sc. Morgan**
**Robert-Koch-Strasse 1, D-8000 München 22 (DE)**

## Beschreibung

Die Erfindung betrifft ein Verfahren zur Anbringung von Gegenständen an einer Wand mittels wenigstens eines Halters, der an der Wand festschraubbar ist und von dem der Gegenstand gehalten ist, bei dem der Halter mittels einer freigelegten Selbstklebeschicht an der Wand befestigt und dann festgeschraubt wird, worauf der Gegenstand an dem Halter angebracht wird. Weiter bezieht sich die Erfindung auf einen durch mittels Befestigungslöcher an einer Wand zu befestigende Halter getragenen Gegenstand zur Ausführung eines derartigen Verfahrens, wobei die Halter auf der Wandanlagefläche eine oder mehrere abgedeckte, jedoch freilegbare Selbstklebeschichten aufweisen, mittels deren sie mit einer vorbestimmten Klebkraft an die Wand anklebbar sind.

Es ist bereits eine Wandplatte zur Befestigung eines Halters für Seife, Zahnpasta u.dgl. mit Hilfe eines Befestigungsmittels zwischen der Platte und der Wand bekannt (DE-OS 1 947 393), wobei der Halter an der Vorderseite der Wandplatte mittels zweier einander diametral gegenüber angeordneter und an der Vorderwand der Platte liegender Vorsprünge befestigt wird. Die dünne massive Kunststoff-Wandplatte weist an der Rückseite eine oder mehrere zweiseitig klebende Schichten auf, wobei die eine klebende Schicht für die Befestigung an der Wandplatte sorgt, während die andere Schicht für die Befestigung der selbstklebenden Schicht und der daran befestigten Wandplatte an der Wand dient. Die selbstklebende Schicht ist vor dem Gebrauch mit einer Schutzschicht abgedeckt, die unmittelbar vor Gebrauch abgezogen werden kann. Derartige Klebbefestigungen sind jedoch zur insbesondere langzeitigen Halterung von Gegenständen an einer Wand nicht geeignet, weil sie nur in beschränktem Masse belastbar sind und die Haftkraft entscheidend vom Oberflächenzustand der Wand beeinflusst wird. Die Klebeschichten trocknen im übrigen mit der Zeit aus, so dass die Haftung des Halters an der Wand mit der Zeit nachlässt.

Weiter ist bereits eine Befestigungsvorrichtung für einen plattenförmigen Körper, insbesondere einen Spiegel, bekannt (DE-U 7 404 254), bei der eine erste ungleichschenklige U-Schiene, deren grösserer Schenkel mit dem freien Ende nach oben an der Wandfläche befestigbar ist, und eine zweite ungleichschenklige U-Schiene, deren grösserer Schenkel mit dem freien Ende nach unten an dem Körper befestigbar ausgebildet ist, vorgesehen sind, wobei der kleinere Schenkel der zweiten Schiene in den kleineren Schenkel der ersten Schiene einhängbar ist und zumindest eine der in Anlage kommenden Flächen der zwei Schienen mit einer Riffelung versehen ist. Die Befestigungsfläche des grösseren Schenkels der ersten und der zweiten Schiene ist mit einer selbstklebenden Beschichtung versehen, die vor dem Gebrauch mit einer abziehbaren Schutzschicht versehen ist. Zum Befestigen des Spiegels an einer Wandfläche wird zuerst eine erste ungleichschenklige U-Schiene mit dem freien Ende ihres grösseren Schenkels nach oben an der Wandfläche befestigt, indem diese zuerst mit Hilfe der an der Befestigungsfläche des grösseren Schenkels aufgebrachten Selbstklebefläche nach Abzug der Schutzschicht auf die Wandfläche aufgeklebt und anschliessend mit Senkkopfschrauben zusätzlich mit der Wandfläche verschraubt wird, wobei der kurze Schenkel der ersten Schiene ebenfalls nach oben zu liegen kommt. An dem Spiegel selbst wird eine zu der ersten Schiene im wesentlichen gleich ausgebildete zweite ungleichschenklige U-Schiene befestigt, indem ihr langer Schenkel mit dem freien Ende nach unten angeordnet wird. Die Befestigung der Schiene an dem Spiegel erfolgt dadurch, dass an der Befestigungsfläche des grösseren Schenkels eine selbstklebende Beschichtung vorgesehen ist.

Zur Aufhängung des Spiegels an der Wandfläche wird der kurze Schenkel der Spiegelschiene an dem kurzen Schenkel der Wandschiene eingehängt.

Bei dieser bekannten Befestigungsvorrichtung kommt der Selbstklebeschicht die Funktion zu, die U-Schiene solange an der Wand provisorisch festzuhalten, bis die Schraublöcher gebohrt und die endgültige Befestigung mit Schrauben erfolgt ist. Bei der bekannten Befestigungsvorrichtung ist also eine exakte Positionierung der U-Schienen erforderlich, damit der Spiegel anschliessend einwandfrei eingehängt werden kann. Die hierzu erforderliche genaue Anordnung der Bohrlöcher kann durch sorgfältiges Massnehmen oder mittels einer besonderen Bohrlehre gewährleistet werden.

Ausgehend von dem letztgenannten Stand der Technik gemäss DE-U 7 404 254 ist es Ziel der vorliegenden Erfindung, ein Verfahren und einen durch Halter getragenen Gegenstand zu schaffen, mit denen ohne Verwendung besonderer Bohrlehren und ohne aufwendiges Massnehmen die Befestigungslöcher für die Halter in der Wand an genau der richtigen Stelle für eine einwandfrei passende Anbringung der Gegenstände gebohrt werden können, so dass nach dem Anschrauben der Halter diese sich automatisch relativ zu dem daran zu befestigenden Gegenstand exakt in der richtigen Lage befinden.

Zur Lösung dieser Aufgabe kennzeichnet sich das erfindungsgemässe Verfahren dadurch, dass der bzw. die Halter zunächst provisorisch an dem Gegenstand bzw. den Gegenständen in der endgültigen Position befestigt werden, dass dann die Freilegung der Selbstklebeschicht(en) erfolgt, dass anschliessend der Gegenstand mit den daran provisorisch befestigten Haltern in die vorbestimmte Position an der Wand gebracht wird, und dass anschliessend vor dem Festschrauben des Halters und dem Anbringen des Gegenstandes an dem Halter der Gegenstand bzw. die Gegenstände von den an der Wand haftenbleibenden Haltern abgenommen wird. bzw. werden.

Der erfindungsgemässe durch Halter getrage-

ne Gegenstand kennzeichnet sich dadurch, dass der Gegenstand parallel zur Wandanlagefläche allseits unverschiebbar mit den Haltern in der endgültigen Relativposition verbindbar, jedoch in Richtung senkrecht zur Wandanlagefläche mit einer geringeren Kraft als der Klebkraft der Halter an der Wand von den Haltern lösbar ist.

Erfindungsgemäss werden also die Halter mittels des Gegenstandes selbst provisorich an der Wand befestigt, wodurch zwangsläufig eine exakte Positionierung der Halter relativ zum Gegenstand gewährleistet ist. Nach dem Abziehen der Gegenstände von den an der Wand haftenden Haltern können die Halter die Aufgabe einer Bohrlehre übernehmen, indem durch die Befestigungslöcher hindurch die erforderlichen Löcher in die Wand gebohrt werden. Anschliessend können dann die Halter gegebenenfalls nach vorheriger Einbringung eines Dübels in das gebohrte Loch mittels Schrauben in üblicher Weise endgültig an der Wand befestigt werden, wobei sie wegen der erfindungsgemässen Anbringung automatisch richtig positioniert sind.

Eine bevorzugte Ausführungsform des durch Halter getragenen Gegenstandes kennzeichnet sich dadurch, dass die Selbstklebeschicht an einem beidseitig klebenden Klebeband mit zwischen den Klebschichten angeordnetem dünnen Schaumstoffträger ausgebildet ist, welcher vorzugsweise nur 0,3 bis 0,6 mm stark ist, und dass das Klebeband in Vertiefungen in der Wandanlagefläche eingeklebt ist, aus der es etwas über die Wandanlagefläche nach aussen vorsteht. Durch diese spezielle Ausbildung der Klebschichten und das Vorstehen von der Wandanlagefläche können auf einfache Weise Wandunebenheiten ausgeglichen werden.

Bei dem Ausführungsbeispiel nach Anspruch 4 ist der Gegenstand ein Beschlag, wie ein Haltegriff, eine Handtuchstange o.dgl., während die Halter an die Wand anschraubbare, zum Aufnahmeraum in den Befestigungsendstücken komplementäre Sockel sind. Die Sockel können vor dem Positionieren an der Wand bereits in ihre endgültige Position in den Befestigungsendstücken des Beschlages gebracht und dann nach Freilegen der Selbstklebeschichten an die richtige Stelle an der Wand gedrückt werden. Indem nunmehr die Mittel für die Halterung der Sockel in den Befestigungsendstücken entsprechend betätigt werden, wird der Beschlag von den an der Wand festklebenden Sockeln abgezogen, worauf diese dann in der oben beschriebenen Weise zeitweise als Bohrlehre verwendet werden können.

Das Ausführungsbeispiel nach Anspruch 5 gestattet es, die Halterung der provisorisch an der Wand befestigten Sockel zu verbessern, indem vor dem Bohren der Befestigungslöcher noch die Stahlnägel in die Wand eingeschlagen werden. Hierdurch ist ein unbeabsichtigtes Lösen oder Abfallen der Sockel von der Wand beim Bohren der Löcher und dem Festschrauben selbst dann vermieden, wenn die Bedienungsperson den Bohrer ungeschickt handhabt. Ausserdem wird durch die zusätzliche Befestigung mittels der Stahlnägel die Halterung des Beschlages bzw. Halters an der Wand verbessrt. Die Selbstklebeschicht gewährleistet das passgenaue Einschlagen der Nägel und damit die exakte Positionierung der Halter.

Aufgrund der Ausführungsform nach Anspruch 6 kann das Unterteil als provisorische zeitweise Bohrlehre für einen grösseren Bohrer verwendet werden, der ein für die Einsetzung eines Dübels geeignetes relativ grosses Loch in die Wand zu bohren gestattet. Wird das Oberteil mit der Schraubenbohrung geringeren Durchmessers zuvor auf das Unterteil aufgesetzt, so kann mittels eines dünneren Bohrers beispielsweise in einer Holzwand ein Loch für eine Holzschraube gebohrt werden.

Durch Ausbildung nach Anspruch 7 können die Stahlnägel auch bei dem Ausführungsbeispiel nach Anspruch 6 Verwendung finden.

Um auch eine einwandfreie Winkellage zwischen Beschlag und Sockel zu gewährleisten, was zur einwandfreien Ausrichtung der Befestigungsmittel zweckmässig ist, sind die Merkmale des Anspruches 8 vorgesehen.

Die Merkmale des Anspruches 9 gewährleisten, dass der Sockel genau bis zu einer vorbestimmten Tiefe in den Beschlag eintreten kann. Zum Bohren eines Dübelloches wird nur das Unterteil in die Befestigungsendstücke eingesetzt, wobei die konische Erweiterung der Sockelunterteile verhindert, dass diese beim Ankleben in das Beschlagteil hineinrutschen. Die Durchmesservergrösserung geht nicht so weit, dass der Sockel über den Aussendurchmesser des Beschlagteils seitlich vorsteht, so dass der äussere Eindruck des Beschlages nicht beeinträchtigt wird. Andererseits erhöht die Durchmesservergrösserung aber die Drehfestigkeit bedeutend, da die hinzukommende Klebefläche grossen radialen Abstand vom Bohrloch hat.

Bei der praktischen Verwirklichung der Erfindung nach Anspruch 10 ist der Gegenstand plattenförmig und insbesondere ein Spiegel, während der Halter aus einem an der Wand zu befestigenden Unterteil und einem darauf aufsetzbaren Oberteil besteht. Bei diesem Ausführungsbeispiel wird zunächst der plattenförmige Gegenstand provisorisch mit der Rückenseitenanlagefläche des Unterteils verbunden. Zur Befestigung sind mindestens zwei, vorzugsweise aber vier Halter erforderlich, welche beispielsweise im Bereich der vier Ecken eines Spiegels angebracht sind. Nach der provisorischen Befestigung der Halter in dieser Weise, was z.B. auch durch Aufschieben von der Seite oder einen Klettverschluss erfolgen kann, wird der plattenförmige Gegenstand an die gewünschte Stelle an der Wand gebracht, wobei die freigelegten Selbstklebeschichten an der Wand haften bleiben. Nunmehr wird der plattenförmige Gegenstand nach Lösen der provisorischen Verbindung mit den Haltern abgenommen, und die Halter können nun in der oben beschriebenen Weise als provisorische zeitweilige Bohrlehre verwendet werden.

Die Ausführung nach Anspruch 11 gestattet eine wirksame provisorische Befestigung des Unterteils des Halters an der Wand auch bei der beschriebenen länglichen Ausbildung.

Aufgrund der Ausbildung nach Anspruch 12 und 13 kann eine erfindungsgemässe provisorische Halterung des Gegenstandes am Halter auf einfache und wirkungsvolle Weise verwirklicht werden.

Die bei allen Ausführungsbeispielen anwendbare Reduzierbuchse nach Anspruch 14 gestattet es wahlweise grössere Löcher für Dübel oder kleinere Löcher für unmittelbare Anordnung der Schraube in die Wand zu bohren.

Die Drehstabilität der Klebeverbindung an der Wand kann auch dadurch verbessert werden, dass die Halter aus hartem Polyäthylen oder Polyoxymethylen bestehen. Aufgrund dieser Materialwahl liegt mit dem Bohrer eine Gleitpaarung mit niedrigem Reibungskoeffizienten vor. Durch Fetten der Bohrungen lassen sich die Gleitverhältnisse weiter verbessern. Ferner sollten die Bohrungen im Sockel deutlich grösser sein als der Bohrerdurchmesser.

Die Erfindung wird im folgenden beispielsweise anhand der Zeichnung beschrieben; in dieser zeigt:

Fig. 1 eine teilweise geschnittene Draufsicht eines als Handtuchstange ausgebildeten Beschlages mit Sockeln gemäss der Erfindung,

Fig. 2 eine teilweise geschnittene Ansicht nach Linie II–II in Fig. 1,

Fig. 3 eine teilweise geschnittene Draufsicht analog Fig. 1 in vergrössertem Masstab, eines Beschlages mit einem zweiteiligen Sockel, bei dem zusätzlich eine Scheibe zwischen Sockeloberteil und Schraubenkopf vorgesehen ist,

Fig. 4 einen Schnitt nach Linie IV–IV in Fig. 3,

Fig. 5 eine ähnliche teilweise geschnittene Draufsicht wie Fig. 3, wobei jedoch statt einer Rundkopfschraube eine Senkkopfschraube zur Befestigung der Sockelteile verwendet wird und zwei Befestigungsnägel dargestellt sind, von denen der linke eingeschlagen und der rechte nicht eingeschlagen dargestellt ist,

Fig. 6 eine Seitenansicht des bei der Ausführungsform nach Fig. 5 verwendeten Sockels, in Richtung auf die als Drehsicherung an den Sockelteilen vorgesehene Feder 29,

Fig. 7 eine schematische Vorderansicht eines mit vier erfindungsgemässen Wandhaltern an einer Wand befestigten Spiegels,

Fig. 8 eine teilweise geschnittene Seitenansicht des Gegenstandes der Fig. 7,

Fig. 9 eine teilweise geschnittene Draufsicht des Gegenstands der Fig. 7,

Fig. 10 eine vergrösserte teilweise geschnittene Seitenansicht eines einzigen erfindungsgemässen Wandhalters im an eine Wand angeschraubten Zustand mit eingesetztem Spiegel,

Fig. 11 eine Draufsicht des beim Wandhalter nach Fig. 10 verwendeten Unterteils,

Fig. 12 eine Seitenansicht des Gegenstandes der Fig. 11,

Fig. 13 einen rein schematischen, nicht massstabsgetreuen Schnitt nach Linie XIII–XIII in Fig. 12 in etwas vergrössertem Massstab,

Fig. 14 eine Seitenansicht des beim Wandhalter nach Fig. 10 verwendeten Oberteils,

Fig. 15 eine Rückansicht des Oberteils nach Fig. 14,

Fig. 16 eine schematische Vorderansicht eines mit erfindungsgemässen Wandhaltern angebrachten Spiegels, wobei die beiden unteren Wandhalter gleichzeitig als Tragarm für eine Ablageplatte ausgebildet sind,

Fig. 17 eine Seitenansicht des Gegenstandes der Fig. 16,

Fig. 18 eine Draufsicht des Gegenstandes der Fig. 16,

Fig. 19 eine teilweise geschnittene vergrösserte Seitenansicht eines der beiden unteren Wandhalter der Ausführungsform nach den Fig. 16 bis 18 mit nach vorn vorstehendem Tragarm,

Fig. 20 eine schematische Vorderansicht eines mit vier erfindungsgemässen Wandhaltern an einer Wand angebrachten Spiegels, wobei die beiden unteren Wandhalter gleichzeitig als Handtuchhalterhaken ausgebildet sind,

Fig. 21 eine Seitenansicht des Gegenstandes der Fig. 20,

Fig. 22 eine Draufsicht des Gegenstandes der Fig. 20,

Fig. 23 eine geschnittene vergrösserte Seitenansicht eines der unteren Wandhalter der Ausführungsform nach den Fig. 20 bis 22 und

Fig. 24 eine teilweise geschnittene Seitenansicht eines an einer Wand befestigten Beschlages mit Spiegelhalter.

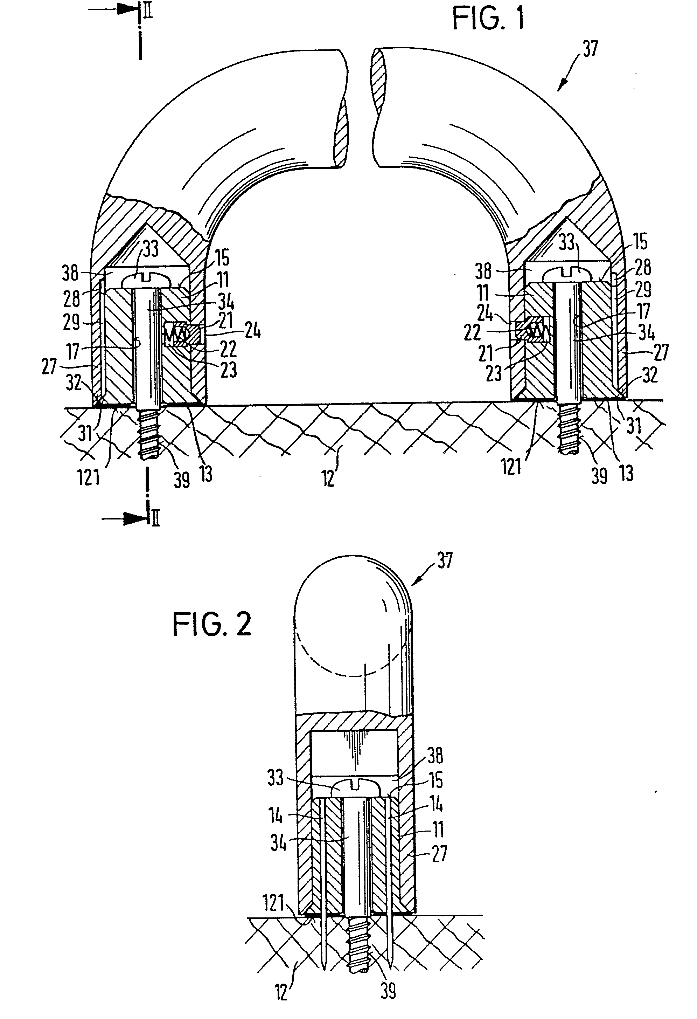

Nach Fig. 1 weist eine Handtuchhaltestange 37 an ihren beiden Enden senkrecht zu einer Wand 12 abgebogene Befestigungsendstücke 27 auf, welche mit einer zur Wand 12 hin offenen hohlzylindrischen Öffnung 38 versehen sind. Die hohlzylindrische Öffnung 38 hat vorzugsweise einen gleichbleibend kreisförmigen Querschnitt, kann jedoch auch ovale oder vieleckige Querschnitte besitzen.

Die hohlzylindrische Öffnung 38 sitzt auf einem einen Halter bildenden, komplementär dazu ausgebildeten Sockel 11, welcher in der Mitte mit einer Schraubenbohrung 17 versehen ist, durch die hindurch eine Befestigungsschraube 34 mit einem Rundkopf 33 hindurchgeführt ist. Die Befestigungsschraube 34 ist unmittelbar in die Wand 12 eingeschraubt, und zwar in ein senkrecht zur Oberfläche der Wand 12 verlaufendes Bohrloch 39. Im fest angezogenen Zustand der Schraube 34 liegt die untere ebene Fläche des Schraubenkopfes 33 auf der oberen Stirnfläche 15 des Sockels 11 auf und drückt diesen fest gegen die Wand 12.

An ihrem der Wand 12 zugewandten Ende weisen die Sockel 11 eine konische Erweiterung 31 auf, welche in Berührung mit einer komplementär dazu verlaufenden konischen Ausnehmung des Befestigungsendstückes 27 steht. Die konische Erweiterung 31 geht jedoch nicht über den Aussendurchmesser des Befestigungsendstükkes 27 hinaus, so dass dieses bis dicht an die Wand 12 herangeführt werden kann. Es verbleibt allenfalls ein geringfügiger Spalt zwischen der ringförmigen Stirnfläche des Befestigungsendstückes 27 und der Wand 12.

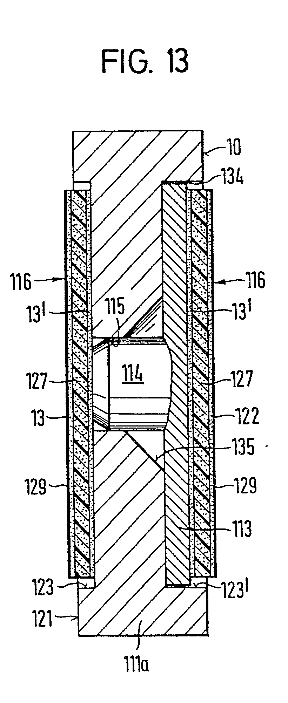

Erfindungsgemäss ist die Wandanlagefläche 121 des Sockels 11 mit einer Selbstklebeschicht 13 versehen, welche vorzugsweise an einem beidseitig selbstklebenden Klebeband 116 (Fig. 13) ausgebildet ist. Das Klebeband ist an die Wandanlagefläche 121 des Sockels 11 angeklebt und weist mit der Selbstklebeschicht 13 zur Wand 12 hin. In der Mitte weist die Klebeschicht 13 eine mit dem Schraubenloch 17 ausgerichtete Durchgangsöffnung für die Schraube 34 auf. Der Aussendurchmesser der kreisförmigen Klebeschicht 13 entspricht dem Aussendurchmesser der der Wand 12 zugekehrten Stirnfläche des Sockels 11.

In einer seitlichen Ausnehmung 23 des Sockels 11 ist ein von einer Schraubendruckfeder 22 beaufschlagter Haltestift 21 angeordnet, welcher in eine radial verlaufende Riegelbohrung 24 des Befestigungsendstückes 27 eingreift und so die Befestigungsstücke 27 der Handtuchstange 37 in Achsenrichtung der Schraube 34 fest mit dem Sockel 11 verbindet.

Nach Fig. 2 sind vorzugsweise um 90° versetzt gegenüber dem Haltestift 21 auf diametral gegenüberliegenden Seiten des Sockels 11 zwei dünne Stahlnägel 14 vorgesehen, welche in die Wand 12 eingeschlagen sind und so zusätzlich zu der Klebeschicht 13 den Sockel 11 an der Wand 12 befestigten.

Die Montage der in Fig. 1 und 2 dargestellten Handtuchstange geht wie folgt vor sich:

Zunächst werden ohne die eingesetzte Schraube 34 die Sockel 11 in den Öffnungen 38 der Befestigungsendstücke 27 so angeordnet, wie das in Fig. 1 und 2 dargestellt ist. Alsdann wird ein vorzugsweise auf der Selbstklebeschicht 13 liegendes Klebschichtschutzblatt 129 (Fig. 13) abgezogen, so dass die Klebeschichten 13 nach aussen frei liegen. Nunmehr wird die Handtuchstange 37 an derjenigen Stelle der Wand 12, wo sie befestigt werden soll, angelegt und gegen die Wand gedrückt. Dabei kleben die Sockel 11 an der Wand 12 fest.

Nunmehr werden die Haltestifte 21 mittels eines geeigneten Werkzeuges nach innen gedrückt, so dass die axiale feste Verbindung zwischen den Sockeln 11 und den Befestigungsendstücken 27 aufgehoben wird. Die Handtuchstange 37 kann jetzt mit den Befestigungsendstücken 27 von den Sockeln 11 abgehoben werden. Die Sockel 11 bleiben allein an der Wand festgeklebt.

Jetzt kann durch die Schraubenbohrung 17 hindurch ein Bohrer geführt werden, mit dem das Befestigungsloch 39 in die Wand 12 gebohrt wird. Sollte ein Dübel verwendet werden müssen, so müsste das Schraubenloch 17 im Durchmesser entsprechend etwas grösser als dargestellt sein.

Bei einer aus Holz bestehenden Wand 12 genügt aber der in den Fig. 1 und 2 dargestellte Durchmesser des Schraubenloches 17, um das für die Befestigung der Schraube 34 erforderliche Loch 39 in die Wand 12 zu bohren.

Nachdem das Loch gebohrt worden ist, werden die Schrauben 34 in der dargestellten Weise eingedreht, bis die Sockel 11 durch die Schraubenköpfe 33 fest gegen die Wand 12 gedrückt werden und so endgültig befestigt sind.

Sofern zusätzlich die in Fig. 2 dargestellten Nägel 14 vorhanden sind, werden diese vor dem Bohren der Löcher 39 mit einem Hammer in die Wand 12 eingeschlagen. Zuvor stehen die Nägel aus der Klebestirnfläche 13 nicht hervor, sondern ragen von der Stirnfläche 15 in den oberen Teil der Öffnung 38 hinein, welche dementsprechend dimensioniert sein muss. Das Ankleben der Sockel 11 wird also durch die Nägel 14 in keiner Weise behindert. Andererseits geben die Nägel 14 nach dem Einschlagen gemäss Fig. 2 einen wesentlich besseren Halt des Sockels 11 beim Bohren der Befestigungslöcher 39.

Nachdem die Sockel 11 in der beschriebenen Weise befestigt worden sind, weisen sie die für eine passgenaue Anbringung der Handtuchstange 37 erforderliche genaue Ausrichtung auf, so dass die Befestigungsendstücke 27 nunmehr zwanglos auf die Sockel 11 aufgeschoben werden können, bis die Haltestifte 21 in die Riegelbohrungen 24 einschnappen.

In vorteilhafter Weise wirken die konischen Ausnehmungen 32 an dem der Wand 12 zugewandten Ende der Befestigungsendstücke 27 als Auflaufschrägen für die Haltestifte 21, so dass diese beim Aufschieben der Befestigungsendstücke 27 automatisch eingedrückt werden, um dann schliesslich in die Riegelbohrungen 24 einzuschnappen.

Um eine einwandfreie Winkelausrichtung zwischen den Befestigungsendstücken 27 und den Sockeln 11 zu erhalten, ist in der Innenwand der Befestigungsendstücke 27 eine parallel zur Schraube 34 verlaufende Nut 28 vorgesehen, in welche eine an der Aussenwand des Sockels 11 vorgesehene Feder 29 in der aus Fig. 1 ersichtlichen Weise eingreift. Es wird so die für das Einschanppen des Haltestiftes 21 in die Riegelbohrung 24 erforderliche Winkelausrichtung zwischen der Handtuchstange 37 und dem Sockel 11 automatisch gewährleistet.

In den folgenden Ausführungsbeispielen bezeichnen gleiche Bezugszahlen entsprechende Teile wie bei dem Ausführungsbeispiel nach den Fig. 1, 2.

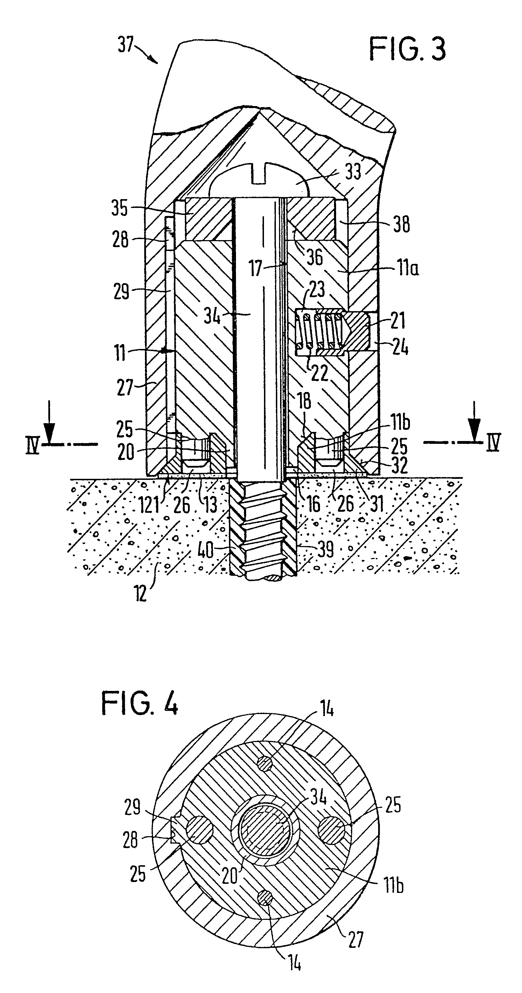

Nach den Fig. 3 und 4 ist der Sockel 11 in ein relativ langes Sockeloberteil 11a und ein relativ dünnes, scheibenartiges Sockelunterteil 11b unterteilt.

Das Sockelunterteil 11b trägt die konischen Erweiterungen 31, die mit den konischen Ausnehmungen 32 des Befestigungsendstückes 27 zusammenwirken. Ausserdem besitzt das Sockelunterteil eine Dübelbohrung 16 mit einem grösseren Durchmesser als die im Sockeloberteil 11a

vorgesehene Schraubenbohrung 17, deren Durchmesser im wesentlichen dem der Schraube 34 entspricht. In die Dübelbohrung 16 greift ein zentraler Hohlzapfen 20 des Sockeloberteils 11a zur Zentrierung der beiden Sockelteile 11 ein.

Zum Zwecke der Drehsicherung zwischen den beiden Sockelteilen 11a, 11b greifen an diametral gegenüberliegenden Seiten des Sockeloberteils 11a zur Wand 12 hin vorspringende Zapfen 25 in dazu komplementäre Löcher 26 des Sockelunterteils 11b ein. Die Feder 29 zur Drehsicherung zwischen dem Sockel 11 und dem Befestigungsendstück 27 ist sowohl am Sockelunterteil 11b als auch am Sockeloberteil 11a vorgesehen. Die Feder 29 greift wieder in eine an der Innenwand des Befestigungsendstückes 27 angeordnete Nut 28 ein.

Die gegebenenfalls vorgesehenen Befestigungsnägel 14 sind gegenüber den Zapfen 25 im Sinne von Fig. 4 um 90° versetzt angeordnet.

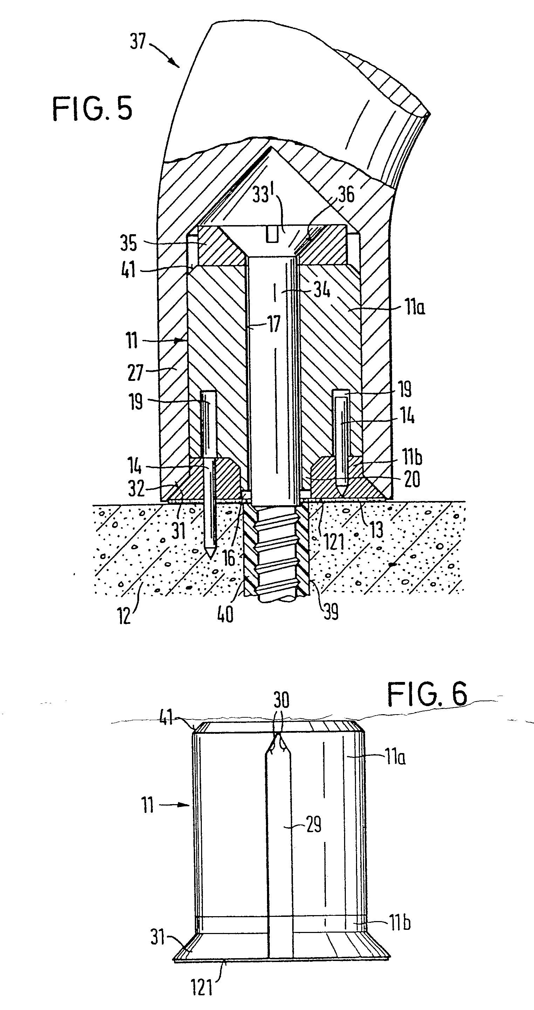

Ausserdem ist bei der Ausführungsform nach Fig. 3 zwischen dem Schraubenkopf 33 und dem Sockeloberteil 11a eine Scheibe 35 angeordnet, welche eine Bohrung mit einem Durchmesser entsprechend dem Schraubenloch 17 aufweist. Von der einen Stirnfläche geht jedoch eine trichterförmige Einsenkung 36 aus, so dass gemäss Fig. 5 auch eine Senkkopfschraube durch Umdrehen der Scheibe 35 gegenüber Fig. 3 einwandfrei an der Scheibe 35 angreifen kann.

Auch die Dübelbohrung 16 des Sockelunterteils 11b weist einen Einlauftrichter 18 zur Erleichterung der Einführung eines Bohrers auf.

Die Montage der Ausführungsform nach den Fig. 3, 4 geht so vor sich, dass zunächst wieder ohne die eingesetzte Schraube 34, ohne die Scheibe 35 und ohne das Sockeloberteil 11a nur das Sockelunterteil 11b in der aus Fig. 3 ersichtlichen Weise in die Befestigungsendstücke 27 eingesetzt werden, wobei für eine geringfügige Haftung und/oder Klemmung zwischen dem Befestigungsendstück 27 und dem Sockelunterteil 11b zu sorgen ist, welche sich schon durch den Konus 31, 32 ergibt. Nach Entfernen der Klebschichtschutzblätter von der Selbstklebeschicht 13, welche in diesem Falle an der Wandanlagefläche 121 des Sockelunterteils 11b vorgesehen ist, wird der Beschlag 37 wieder an die für ihn vorgesehene Stelle der Wand gedrückt, wobei die Sockelunterteile 11b an der Wand festkleben. Wird jetzt der Beschlag 37 abgezogen, so bleibt das Sockelunterteil 11b an der Wand festgeklebt, und zwar aufgrund der Nut 28 und der Feder 29 in der richtigen Winkelausrichtung. Nunmehr kann durch die Dübelbohrung 16 hindurch die Dübelbohrung 39 in die Wand 12 eingebracht werden. Die Sockelunterteile 11b dienen nunmehr also allein als Bohrlehre. Da während dieses ersten Stadiums der Montage die Sockeloberteile nicht benötigt sind, entfällt auch die Notwendigkeit, die zwischen dem Beschlag und den Sockeloberteilen angeordneten Haltestifte zu lösen. Da das Lösen dieser Haltestifte unter gleichzeitigem Abziehen des Beschlages durch eine Person etwas schwierig ist, bedeutet diese zweiteilige Ausbildung der Sockel 11 eine wesentliche Vereinfachung der Montagearbeit.

Sofern der Dübel 40 entbehrlich ist, weil es sich z.B. um eine Wand 12 aus Holz handelt, wird vor dem Bohrvorgang das Sockeloberteil 11a auf das Sockelunterteil 11b aufgesteckt. Nunmehr kann beispielsweise ein im Durchmesser kleinerer Holzbohrer durch das Schraubenloch 17 hindurchgeführt und zur Bohrung des Befestigungsloches in der Wand 12 verwendet werden. In diesem Fall übernimmt das Sockeloberteil 11a vorübergehend die Funktion der Bohrlehre. Die zweiteilige Ausbildung der Sockel ermöglicht somit auch das Bohren von Befestigungslöchern unterschiedlicher Durchmesser.

Nachdem die Bohrungen auf diese Weise passgenau angebracht wurden, wird die Schraube 34 in der aus den Fig. 3 und 4 ersichtlichen Weise eingeschraubt, nachdem vorher die Scheibe 35 in der richtigen Richtung auf das Sockeloberteil 11a aufgelegt wurde. Nach dem Festziehen der Schraube 34 drückt deren Kopf 33 den Sockel 11 über die Scheibe 35 fest gegen die Wand 12 an, so dass nunmmehr eine einwandfreie Befestigung gegeben ist. Der Beschlag 37 kann nunmehr auf die passgenau angeordneten Sockel 11 aufgeschoben werden, wobei der Haltestift 21 in die Riegelbohrung 24 einschnappt.

Die axiale feste Verbindung zwischen den Befestigungsendstücken 27 und den Sockeln 11 kann auch durch andere geeignete Mittel als den Haltestift 21 verwirklicht werden.

Bei dem Ausführungsbeispiel nach Fig. 5 weist die Schraube 34 einen Senkkopf 33' auf, welcher in die entsprechend geformte konische Einsenkung 36 der Scheibe 35 eingreift. Weiter ist in Fig. 5 noch dargestellt, wie die zusätzlichen Befestigungsnägel 14 bei der Unterteilung des Sockels 11 in zwei Sockelteile 11a, 11b angeordnet werden. Die Nägel 14 können hier wesentlich kürzer ausgeführt sein, weil sie lediglich in dem relativ dünnen Sockelunterteil 11b angeordnet sein müssen. Bei aufgesetztem Sockeloberteil 11a (z.B. beim Transport) stehen die Nägel 14 in der rechts von der Mitte in Fig. 5 angedeuteten Weise in parallel zu der Schraube 34 verlaufende Aufnahmekanäle 19 im Sockeloberteil 11a vor. Sobald das Sockeloberteil 11a zur Montage vom Sockelunterteil 11b abgenommen ist, liegen die vorstehenden Enden der Nägel 14 nach aussen frei, so dass sie nach dem Ankleben des Sockelunterteiles 11b an der Wand 12 mit einem Hammer so eingeschlagen werden können, wie das in Fig. 5 links von der Schraube 34 zeichnerisch dargestellt ist. Bei eingeschlagenen Nägeln 14 ist das Sockelunterteil 11b während des Lochbohrens noch besser gegen Verdrehung oder sonstige Verschiebung gesichert, als dies allein mit der Selbstklebeschicht 13 möglich ist.

Sofern die zusätzliche Sicherung durch die Nägel 14 nicht erforderlich oder aufgrund der Eigenschaften der Wand 12 nicht möglich sein sollte (z.B. Fliesenwand), bleiben die Nägel 14 in der in Fig. 5 rechts von der Schraube 34 dargestellten zurückgezogenen Lage. Beim Aufsetzen des Sok-

keloberteiles 11a werden dann die vorstehenden Enden der Nägel 14 wieder von den Aufnahmekanälen 19 aufgenommen.

Nach Fig. 6 weist die Feder 29 an ihrem von der Wand 12 abgewandten Ende symmetrisch zwei Einlaufschrägen 30 auf, so dass bei geringfügigen Winkel-Fehlausrichtungen zwischen Befestigungsendstück 27 und Sockel 11 eine gewisse Korrekturverdrehung möglich ist.

Um das Aufsetzen der Befestigungsendstücke 27 auf den Sockel 11 zu erleichtern, kann ausserdem an dem von der Wand 12 abgewandten Ende des Sockels 11 eine geringfügige Auflaufschräge 41 (Fig. 5, 6) vorgesehen sein.

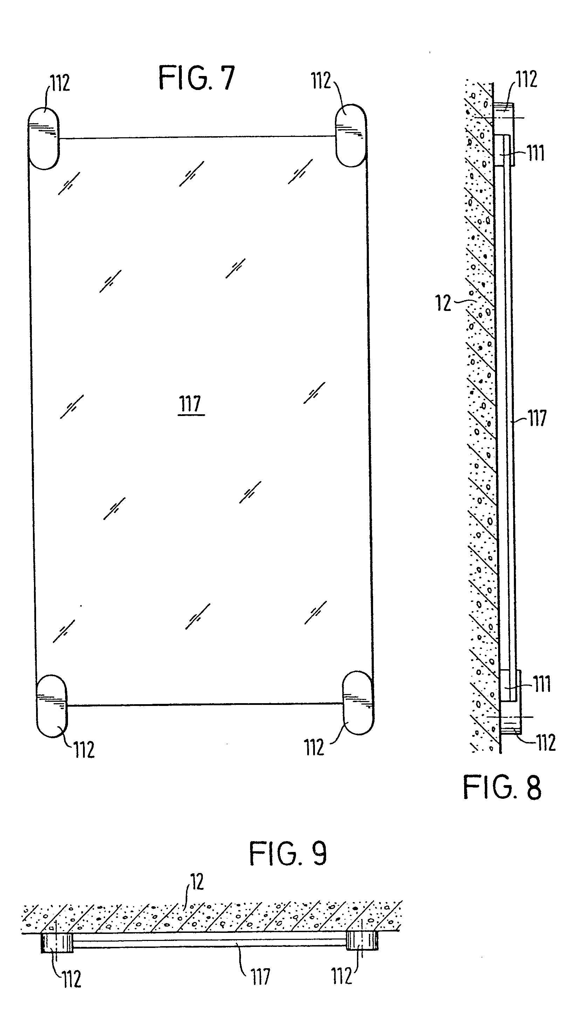

Die Fig. 7 bis 9 zeigen einen mit vier aus je einem Unterteil 111 und einem Oberteil 112 bestehenden Haltern an der Wand 12 befestigten Spiegel 117 in Vorderansicht, Seitenansicht bzw. Draufsicht.

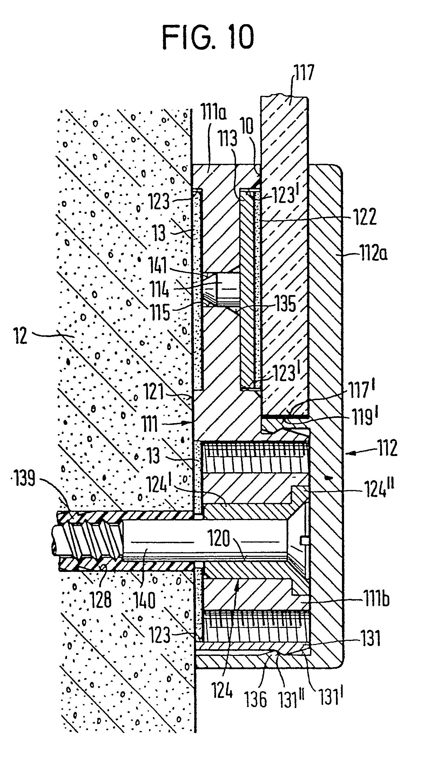

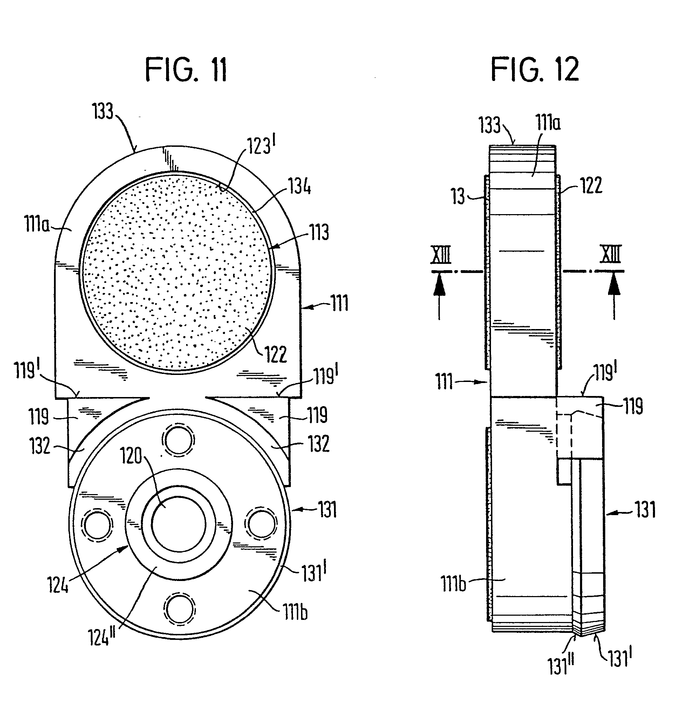

Nach den Fig. 10 bis 12 besteht das Unterteil 111 des erfindungsgemässen Wandhalters aus einem Abstützbereich 111a, welcher an einem Ende abgerundet ist und über zwei parallele geradlinige Seiten mit einem Anschraubteil 111b verbunden ist. Nach Fig. 11 bilden der Abstützbereich 111a und das Anschraubteil 111b ein längliches Gebilde mit an beiden Enden halbkreisförmig abgerundeten Rändern, welche über parallele geradlinige Seiten miteinander verbunden sind.

In der Mitte des Anschraubteils 111b ist in einer Reduzierbuchse 124 ein Schraubenloch 120 vorgesehen, dessen Achse senkrecht auf dem Unterteil 111 bzw. der Wand 12 (Fig. 10), an die es angeschraubt werden soll, steht. Die Reduzierbuchse 124 hat die aus Fig. 10 im einzelnen ersichtliche Form mit einem in einer Bohrung des Anschraubteils 111b angeordneten zylindrischen Bereich 124' sowie einen erweiterten Kopf 124″, der in einer entsprechenden Ausnehmung an der Oberfläche des Unterteils 111 angeordnet ist. Auf diese Weise kann die Reduzierbuchse 124 leicht nach vorn herausgenommen bzw. wieder in den Kanal des Unterteils 111 eingeführt werden.

Nach den Fig. 10 bis 12 weist das Anschraubteil 111b an seiner Frontseite einen rundumlaufenden Schnappwulst 131 auf, welcher relativ flach von vorn nach hinten sich konisch erweiternde Schrägflächen 131' und anschliessend etwas steiler nach hinten abfallende Schrägflächen 131″ besitzt.

In einem radialen Abstand von dem Ringwulst 131 befinden sich auf der dem Abstützbereich 111a zugewandten Seite Anschläge 119, zwischen denen und dem Anschraubteil 111b ein ringförmiger Zwischenraum 132 vorliegt. Die in Fig. 11 und 12 obere Fläche der Anschläge 119 dient als Anschlagfläche 119' für den vom Halter zu tragenden Spiegel 117 (Fig. 7 bis 9). Es ist also wichtig, dass die Anschlagflächen 119' im wesentlichen eben und senkrecht zu der Längsachse des Unterteils 111 verlaufen. Insgesamt haben also die Anschläge 119 im wesentlichen die aus Fig. 11 ersichtliche keilartige Form.

Im Abstützbereich 111a springt das Unterteil gegenüber dem den Ringwulst 131 aufweisenden Anschraubteil 111b deutlich nach hinten zurück. Erfindungsgemäss ist in der vorderen Fläche des Abstützbereiches 111a eine kreisförmige Vertiefung 123' (Fig. 10, 11) vorgesehen, welche konzentrisch mit dem kreisförmigen Rand 133 des Abstützbereiches 111a ist.

In die Vertiefung 123' ist erfindungsgemäss mit allseitig vorgesehenem Spiel 134 eine kreisförmige Klebeplatte 113 eingesetzt (Fig. 10 bis 13). Die Klebeplatte 113 ist an ihrer Rückseite mit einem konzentrischen Zapfen 114 versehen, welcher durch eine an die Vertiefung 123' anschliessende Bohrung 115 bis zu einer auf der entgegengesetzten Seite vorgesehenen weiteren kreisförmigen Vertiefung 123 reicht. Der Zapfen 114 erstreckt sich ein klein wenig in die zur Vertiefung 123' konzentrische Vertiefung 123 hinein. Zur Erleichterung des Einführens des Zapfens 114 in die Bohrung 115 ist diese an ihrer Vorderseite mit einem Einführungstrichter 135 versehen.

Auf der vom Zapfen 114 abgewandten Kreisfläche der Klebeplatte 113 ist nach Fig. 13 ein entsprechend dimensioniertes kreisförmiges Klebeband 116 angeklebt, welches – von der Klebeplatte 113 ausgehend – aus einer Selbstklebeschicht 13', einem Schaumstoffkörper 127, einer weiteren Selbstklebeschicht 122 und einem darauf befindlichen Klebschicht-Schutzblatt 129 besteht. Wie insbesondere aus Fig. 13 ersichtlich ist, steht der Schaumstoffkörper 127 etwa um die Hälfte seiner Stärke über die vordere Fläche des Abstützbereiches 111a vor.

In der entgegengesetzten Vertiefung 123 ist ein gleichartiges, beidseitig selbstklebend ausgebildetes Klebeband 116 angeordnet, welches eine innere Selbstklebeschicht 13', einen Schaumstoffkörper 127, die äussere Selbstklebeschicht 13 und ein darauf angeordnetes Klebeschichtschutzblatt 129 aufweist. Die beidseitig selbstklebend ausgebildeten Klebebänder 116 sind vorzugsweise identisch aus dem gleichen Material aufgebaut. Sie werden zweckmässig bei allen beschriebenen Ausführungsbeispielen verwendet.

Nach Fig. 10 ist auch um das Schraubenloch 120 herum und konzentrisch zu diesem in der Rückseite des Anschraubteils 111b eine Vertiefung 123 vorgesehen, in der ebenfalls ein beidseitig selbstklebendes Klebeband mit einer Selbstklebeschicht 13 untergebracht ist, welches analog den Klebebändern 116 nach Fig. 13 aufgebaut ist. Mittels der inneren Klebeschichten 13' sind die drei Klebebänder in den Vertiefungen 123 bzw. an der Klebeplatte 113 festgeklebt.

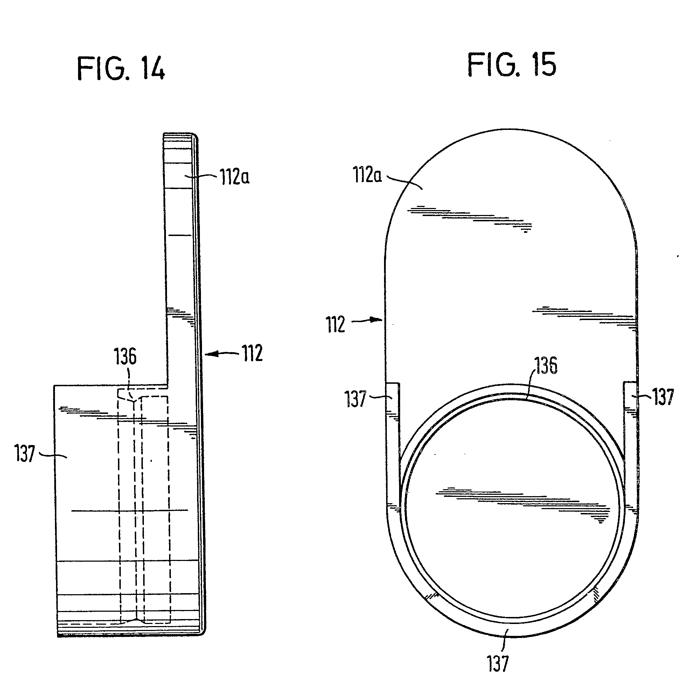

Nach Fig. 10 ist auf das Unterteil 111 nach den Fig. 11, 12 ein Oberteil 112 nach den Fig. 14, 15 aufgesetzt. In der Rückansicht nach Fig. 15 hat das Oberteil 112 eine entsprechende Form wie das Unterteil 111. Es ist im Bereich des Ringwulstes 131 mit einem Gegenschnappring 136 versehen, welcher gemäss Fig. 10 federnd auf den Ringwulst 131 aufgeschnappt werden kann. Unten und teilweise an den Seiten verlaufende Wände 137 decken den Anschraubteil 111b nach aussen ab. Funktionell besonders wichtig ist jedoch der von dem Gegenschnappring 136 parallel zur Fläche des Spiegels 117 vorspringende Abstützlappen 112a, welcher nach Fig. 10 den Rand des Spiegels 117 gegen den Abstützbereich 111a bzw. die Klebeplatte 113 drückt.

Die Montage des erfindungsgemässen Spiegelhalters geht wie folgt vor sich:

Zunächst wird der Spiegel 117 mit seiner Vorderseite auf eine Unterlage beispielsweise einen Tisch gelegt. Jetzt werden an den vier Ecken in der Anordnung nach den Fig. 7 bis 9 vier Unterteile 111 von hinten an den Spiegel 117 angelegt, nachdem von dem Klebeband 116 die Klebeschichtschutzblätter 129 abgezogen wurden und so die Selbstklebeschichten 122 freigelegt wurden. Dadurch kleben jetzt die Klebeplatten 113 an der Rückseite des Spiegels 117 fest. Andererseits reicht der Zapfen 114 bis zu der inneren Klebeschicht 13' des Klebebandes 116 (Fig. 13), so dass auch das gesamte Unterteil 111 mit dem Spiegel 117 durch Klebung verbunden ist. Bei der Anordnung der Unterteile 111 ist darauf zu achten, dass die Anschlagflächen 119' am äusseren Rand des Spiegels 117 anliegen.

Nunmehr werden auch die Klebschichtschutzblätter 129 von den rückwärtigen Klebebändern 116 abgezogen, so dass die äusseren Selbstklebeschichten 13 freigelegt werden. Anschliessend wird der Spiegel 117 zusammen mit den vier an ihm festgeklebten Unterteilen 111 an die richtige Stelle der Wand 12 (Fig. 7 bis 9) gebracht. Sobald dieses geschehen ist, werden die vier Unterteile 111 fest gegen die Oberfläche der Wand 12 gedrückt. Hierbei kleben die Unterteile 111 mittels der äusseren Selbstklebeschichten 13 an der Wand 12 fest. Durch den vorstehenden Schaumstoffkörper 127 (Fig. 13) werden etwaige Wandunebenheiten ausgeglichen.

Wird jetzt der Spiegel 117 nach vorne abgenommen, so lösen sich die relativ schwachen Klebstellen zwischen den Zapfen 114 und den inneren Klebschichten 13'. Die Klebeplatten 113 bleiben somit mit dem Spiegel 117 verbunden, während die Unterteile 111 im übrigen an der Wand 12 kleben.

Die an der Wand festgeklebten Unterteile 111 dienen nunmehr als Bohrlehre zur Anbringung einer Besfestigungsbohrung 128 (Fig. 10) in der Wand 12. Falls – wie das in Fig. 10 dargestellt ist –, ein Dübel 139 verwendet werden soll, muss zunächst die Reduzierbuchse 124 aus dem Unterteil 111 herausgezogen werden. Anschliessend kann dann mit einem entsprechend grossen Bohrer das Befestigungsloch 128 für den Dübel 139 gebohrt werden. Anschliessend wird dann die Reduzierbuchse 124 wieder eingesetzt. Nunmehr kann eine Schraube 140 durch das Schraubenloch 120 hindurchgeführt und in den Dübel 139 eingeschraubt werden, bis gemäss Fig. 10 das Unterteil 111 durch die Schraube 140 an der Wand 12 befestigt ist. Die Klebeschichten 13 haben jetzt nur noch insofern eine Funktion, als sie einer Verdrehung des Unterteils 111 um die Achse der Schraube 140 entgegenwirken.

Sobald alle vier Unterteile 111 auf diese Weise befestigt worden sind, befinden sie sich in einer exakt positionierten Lage, so dass jetzt nur noch der Spiegel 117 mit den noch daran klebenden Klebeplatten 113 aufgesetzt zu werden braucht. Die Zapfen 114 dringen dabei über den Einführungstrichter 135 in die Bohrungen 115 ein. Auch das Ende des Zapfens 114 selbst sollte gemäss Fig. 10 mit einem die Einführung erleichternden Endkonus 141 versehen sein. Die Klebeplatte 113 wird so auf einfache Weise und ohne eine besondere Aufmerksamkeit der Bedienungsperson in die Vertiefung 123' eingesetzt. Für das einfache Einführen ist auch das ringsum vorgesehene Spiel 134 (Fig. 12 und 13) von Bedeutung.

Nachdem so der Spiegel 117 problemlos auf die vier Unterteile 111 aufgesetzt ist, brauchen nur noch die zu jedem Unterteil 111 gehörenden Oberteile 112 nach den Fig. 14, 15 axial aufgesetzt zu werden, bis der Gegenschnappring 136 gemäss Fig. 10 über den Ringwulst 131 geschnappt ist. Dabei legt sich der Abstützlappen 112 a von vorn an den Spiegel 117 an und legt diesen am Unterteil 111 fest.

Aufgrund der durch die Schraube 140 hervorgerufenen Andrückkraft liegt nun auch die Wandanlagefläche des Unterteils 111 satt an der Oberfläche der Wand 12 an.

Ein Lösen des Spiegels 117 ist jederzeit dadurch möglich, dass mittels eines geeigneten Werkzeuges das Oberteil 112 wieder vom Unterteil 111 abgezogen wird. Anschliessend kann der Spiegel 117 mit den daran angeklebten Klebeplatten 113 zwanglos nach vorn abgenommen werden. Ein vorzeitiges Herausfallen des Spiegels 117 bei dieser Demontage wird durch das leichte Ankleben des Zapfens 114 an der inneren Selbstklebeschicht 13' verhindert. Der entsprechende leichte Halt der Klebeplatte 113 am Anschraubteil 111b kann auch durch andere Mittel, beispielsweise durch einen leichten Presssitz des Zapfens 114 in der Bohrung 115 oder durch eine Schnappverbindung herbeigeführt werden.

Nach der endgültigen Befestigung aller Unterteile 111, der Anbringung des Spiegels 117 und dem Aufschnappen der Oberteile 112 ist der Spiegel 117 so an der Wand 12 befestigt, wie das in den Fig. 7 bis 9 dargestellt ist. Wesentlich ist, dass zwischen dem Spiegel 117 und der Oberfläche der Wand 12 ein Zwischenraum verbleibt, durch den hindurch die Lüftung der Rückseite des Spiegels 117 erfolgen kann.

Die Anbringung eines Spiegels gemäss der Erfindung ist besonders vorteilhaft bei gefliesten Wänden, denn hier wirken sich die Vorteile des eine Bohrlehre bildenden erfindungsgemässen Unterteils 111 besonders günstig aus.

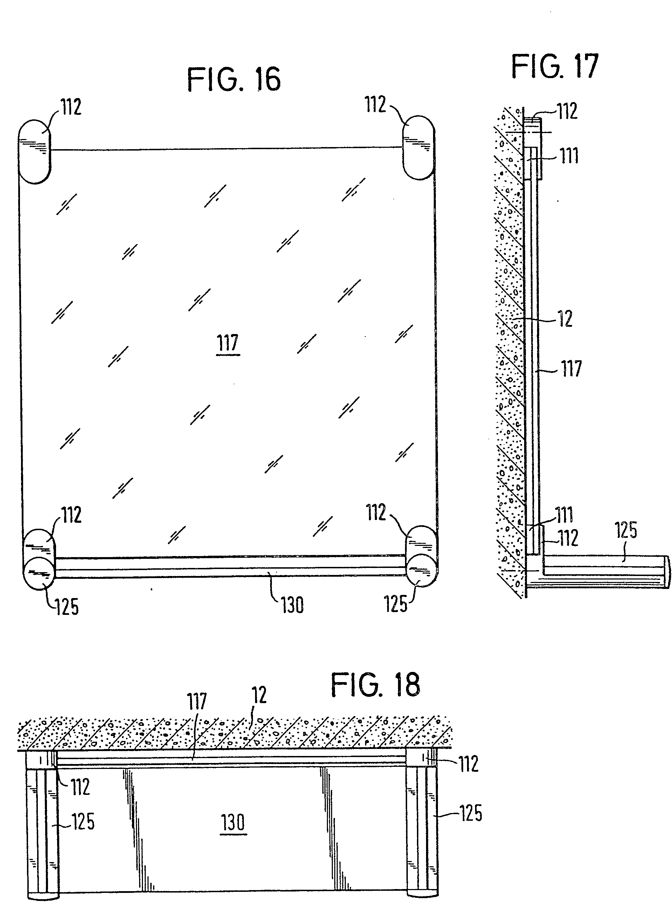

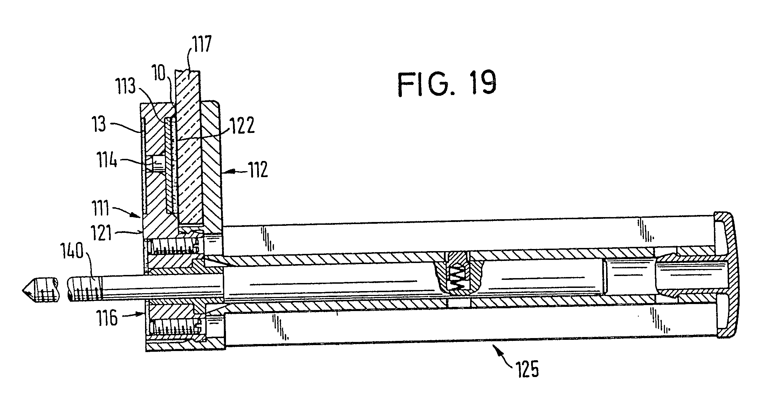

Die Fig. 16 bis 18 zeigen zu den Fig. 7 bis 9 analoge Ansichten, wobei jedoch der Spiegel 117 ein etwas anderes Seitenverhältnis hat und die beiden unteren Wandhalter ein Oberteil 112 aufweisen, von dem sich nach vorn jeweils ein Tragarm 125 erstreckt. Die beiden Tragarme 125 nehmen eine sich horizontal erstreckende Ablageplatte 130 auf. Fig. 19 zeigt die Anordnung des Tragarms 125 in vergrössertem Masstab. Gleiche Bezugszahlen bezeichnen entsprechende Teile wie bei dem Ausführungsbeispiel nach den Fig. 7 bis 15.

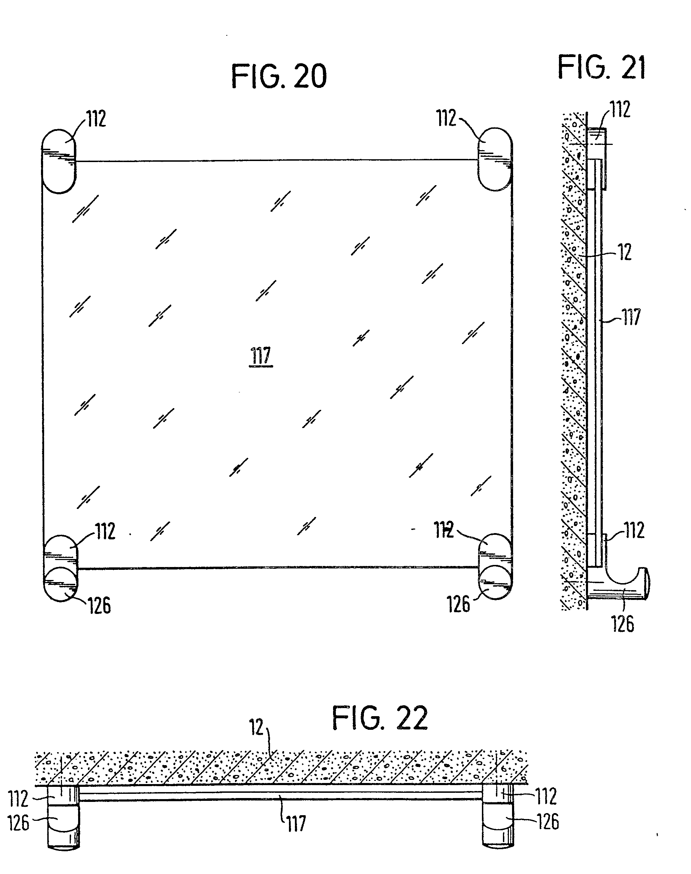

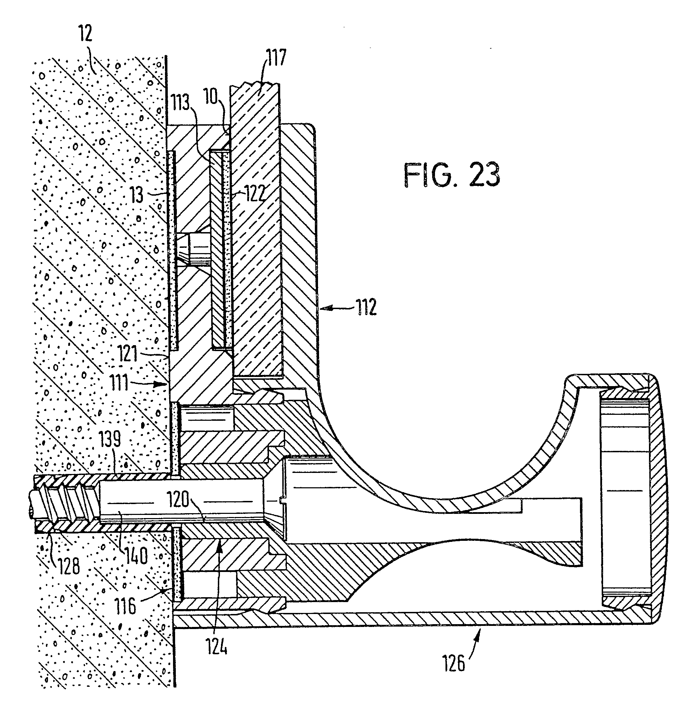

Bei der Ausführungsform nach den Fig. 20 bis 23 sind die unteren beiden Oberteile 112 mit einem Handtuchhalterhaken 126 versehen, welcher vom unteren Bereich der Oberteile im Bereich des Schraubenloches 120 nach vorn vorspringt. Auch in Fig. 23 bezeichnen gleiche Bezugszahlen entsprechende Teile wie bei dem Ausführungsbeispiel nach den Fig. 7 bis 15, wobei jedoch der übersichtlichen Darstellung halber nicht alle Bezugszahlen wiederholt sind.

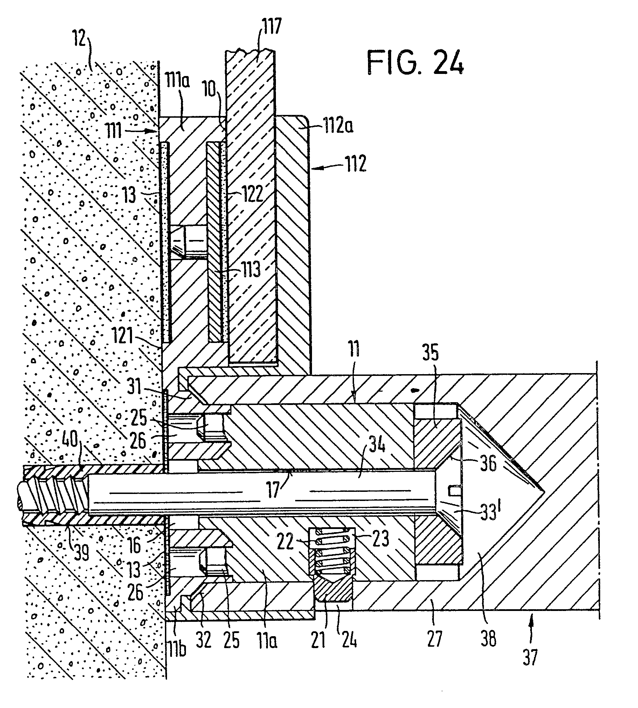

Fig. 24 zeigt die gleichzeitige Anwendung der Erfindung bei einem Beschlag nach den Fig. 1 bis 6 und einem Spiegelhalter nach den Fig. 7 bis 15. Gleiche Bezugszahlen bezeichnen entsprechende Teile wie bei den vorangehenden Ausführungsbeispielen. Das Sockelunterteil 11b weist einen parallel zu der Wand sich erstreckenden Fortsatz 111a auf, wobei ausserdem ein den Spiegel 117 gegen den Fortsatz 111a drückendes Oberteil 112 von dem Befestigungsendstück 27 an dem Sockelunterteil 11b bzw. dessen Fortsatz 111a gehalten ist. Auch der Fortsatz 111a weist eine Selbstklebeschicht 13 an seiner Rückseite auf, welche in Aufbau und Funktion entsprechend der Selbstklebeschicht 13 an dem Sockelunterteil 11b ausgebildet ist. Die auf der dem Spiegel 117 zugewandten Fläche des Fortsatzes 111a angeordnete Klebeplatte 113 mit der dem Spiegel 117 zugewandten Selbstklebeschicht 122 ist wie oben beschrieben ausgebildet. Im Gegensatz zu der oben beschriebenen Anordnung wird jedoch die Ausrichtung des Sockels 11 an der Wand 12 mittels des Beschlages 37 und nicht mit dem Spiegel 117 durchgeführt.

Die kombinierten Spiegelhalter/Sockel-Unterteile 11, 111 sind nur unten vorgesehen und werden provisorisch in die Befestigungsenden des als Handtuchstange oder Spiegelablage ausgebildeten Beschlages 37 eingesetzt. Der Beschlag 37 wird dann in der gewünschten Endlage an die Wand 12 angedrückt, wobei die Spiegelhalter/Sockel-Unterteile 11, 111 an der Wand 12 festkleben.

Anschliessend wird der Beschlag 37 wieder nach vorn abgezogen. Durch die Unterteile 11, 111, die an der Wand 12 klebengeblieben sind, werden jetzt die Schraublöcher 39 gebohrt. Dann werden die Sockelunterteile 11b mitsamt den Sockeloberteilen 11a festgeschraubt. Jetzt wird der Spiegel 117 angelegt, dessen obere beide Halter 111, 112 gemäss dem Ausführungsbeispiel nach den Fig. 7 bis 15 ausgebildet sind und entsprechend montiert werden, wobei der Spiegel 117 zwecks Anschraubung der oberen Unterteile 111 nochmals abgenommen werden muss.

Nach erneutem Anbringen des Spiegels 117 werden dann die unteren und oberen Oberteile 112 aufgesetzt und der Beschlag 37 auf die Sockeloberteile 11a aufgedrückt, wobei die Federbolzen 21 einrasten. Die unteren Oberteile 112 werden dabei zwischen den Unterteilen 11, 111 und den Befestigungsendstücken 27 des Beschlages 37 eingeklemmt. Ihre Bohrung besitzt hierzu einen inneren Bund.

An den nicht dargestellten oberen Unterteilen 111 wird der Spiegel 117 durch die Oberteile 112 so wie nach den Fig. 7 bis 15 festgelegt.

Die Erfindung kann so zweifach, nämlich zur Befestigung eines Beschlages und eines Spiegels angewendet werden, wobei die Positionierung der unteren Halter 11, 111, 112 durch den Beschlag 37, die der oberen, nicht dargestellten Halter 111, 112 durch den angelegten Spiegel 117 vorgenommen wird.

## Patentansprüche

1. Verfahren zur Anbringung von Gegenständen (37, 117) an einer Wand (12) mittels wenigstens eines Halters (11; 111, 112), der an der Wand (12) festschraubbar ist und von dem der Gegenstand (37, 117) gehalten ist, bei dem der Halter (11; 111, 112) mittels einer freigelegten Selbstklebeschicht an der Wand (12) befestigt und dann festgeschraubt wird, worauf der Gegenstand (37, 117) an dem Halter (11; 111, 112) angebracht wird, dadurch gekennzeichnet, dass der bzw. die Halter (11; 111, 112) zunächst provisorisch an dem Gegenstand (37; 117) bzw. den Gegenständen (37, 117) in der endgültigen Position befestigt werden, dass dann die Freilegung der Selbstklebeschicht(en) (13) erfolgt, dass anschliessend der Gegenstand (37, 117) mit den daran provisorisch befestigten Haltern (11; 111, 112) in die vorbestimmte Position an der Wand (12) gebracht wird, und dass anschliessend vor dem Festschrauben des Halters (11; 111, 112) und dem Anbringen des Gegenstandes (37, 117) an dem Halter (11; 111, 112) der Gegenstand (37; 117) bzw. die Gegenstände 37, 117) von den an der Wand (12) haftenbleibenden Haltern (11; 111, 112) abgenommen wird bzw. werden.

2. Durch mittels Befestigungslöchern an einer Wand (12) zu befestigende Halter (11; 111, 112) getragener Gegenstand (37, 117) zur Ausführung des Verfahrens nach Anspruch 1, wobei die Halter (11; 111, 112) auf der Wandanlagefläche eine oder mehrere abgedeckte, jedoch freilegbare Selbstklebeschichten (13) aufweisen, mittels deren sie mit einer vorbestimmten Klebkraft an die Wand (12) anklebbar sind, dadurch gekennzeichnet, dass der Gegenstand (37, 117) parallel zur Wandanlagefläche (121) allseits unverschiebbar mit den Haltern (11; 111, 112) in der endgültigen Relativposition verbindbar, jedoch in Richtung senkrecht zur Wandanlagefläche (121) mit einer geringeren Kraft als der Klebkraft der Halter (11; 111, 112) an der Wand (12) von den Haltern (11; 111, 112) lösbar ist.

3. Durch Halter getragener Gegenstand nach Anspruch 2, dadurch gekennzeichnet, dass die Selbstklebeschicht (13) an einem beidseitig klebenden Klebeband (116) mit zwischen den Klebschichten (13, 13') angeordnetem dünnen Schaumstoffträger (127) ausgebildet ist, welcher vorzugsweise nur 0,3 bis 0,6 mm stark ist, und dass das Klebeband (116) in Vertiefungen (123) in der Wandanlagefläche (121) eingeklebt ist, aus der es etwas über die Wandanlagefläche (121) nach aussen vorsteht.

4. Durch Halter getragener Gegenstand nach Anspruch 2 oder 3 in Form eines Beschlages (37), wie eines Haltegriffes, einer Handtuchstange o.dgl. mit wenigstens einem, vorzugsweise mehreren und insbesondere zwei im wesentlichen senkrecht zur Wand (12) verlaufenden, einen zur Wand (12) offenen Aufnahmeraum aufweisenden Befestigungsendstücken, in denen als Halter an die Wand (12) anschraubbare Sockel (11) angeordnet sind, an denen die Befestigungsendstücke nach dem Aufschieben durch Befestigungsmittel (21, 22, 23, 24) festlegbar sind, dadurch gekennzeichnet, dass die Sockel (11) an ihrer Wandanlagefläche (121) mit der Selbstklebeschicht (13) versehen sind und die Befestigungsmittel (21, 22, 23, 24) so weit lösbar sind, dass der Beschlag (37) senkrecht zur Wandanlagefläche (121) mit einer geringeren Kraft als der Klebkraft der Sockel (11) an der Wand (12) von den Sockeln (11) abziehbar ist.

5. Durch Halter getragener Gegenstand nach Anspruch 4, dadurch gekennzeichnet, dass die Sockel (11) im wesentlichen senkrecht zu der Wandanlagefläche (121) verlaufende Nägel (14), insbesondere Stahlnägel enthalten, welche länger als der Sockel (11) sind und von der von der Wandanlagefläche (121) abgewandten Stirnfläche (15) vorstehen, jedoch über ein längeres Führungsstück im Sockel (11) geführt sind.

6. Durch Halter getragener Gegenstand nach Anspruch 4 oder 5, dadurch gekennzeichnet, dass die Sockel (11) in ein Oberteil (11a) und ein Unterteil (11b) unterteilt sind, wobei die Selbstklebeschicht (13) am Unterteil (11b) vorgesehen ist, und dass vorzugsweise das Unterteil (11b) eine grössere Dübelbohrung (16) und das Oberteil (11a) eine damit ausgerichtete Schraubenbohrung (17) von geringerem Durchmesser aufweist, und dass die Befestigungsmittel (21, 22, 23) für den Beschlag (37) am Sockeloberteil (11a) angeordnet sind.

7. Durch Halter getragener Gegenstand nach Anspruch 5 und 6, dadurch gekennzeichnet, dass die Nägel (14) im Unterteil (11b) angeordnet sind und vor dem Einschlagen in Aufnahmekanäle (19) des Oberteils (11a) hineinragen.

8. Durch Halter getragener Gegenstand nach einem der Ansprüche 4 bis 7, dadurch gekennzeichnet, dass zwischen den Befestigungsendstücken (27) und dem Sockel (11) eine axial verlaufende Nut (28)-Feder (29)-Verbindung vorgesehen ist.

9. Durch Halter getragener Gegenstand nach einem der Ansprüche 4 bis 8, dadurch gekennzeichnet, dass der Sockel (112) bzw. das Unterteil (11b) an der der Wand (12) zugekehrten Seite eine konische Erweiterung (31) relativ geringer Tiefe aufweist und das Befestigungsendstück (27) am Ende innen eine dazu komplementäre Ausnehmung (32) besitzt.

10. Durch Halter getragener Gegenstand nach Anspruch 2 oder 3 in Form einer Platte, z.B. eines Spiegels, der von an der Wand (12) befestigbaren, eine Wandanlagefläche (121) aufweisenden Unterteilen (111), die wenigstens ein im wesentlichen senkrecht auf der Wandanlagefläche (121) stehendes Schraubenloch aufweisen, und auf das Unterteil (111) aufsetzbaren Oberteilen als Halter abgestützt ist, dadurch gekennzeichnet, dass die Wandanlagefläche (121) wenigstens teilweise mit der Selbstklebeschicht (13) versehen ist und die für die Platte (117) vorgesehene Rückseitenanlagefläche (10) des Unterteils (111) wenigstens teilweise durch eine zweite Selbstklebeschicht (122) gebildet ist, die sich an einer in den Abstützbereich (111a) des Unterteils (111) lösbar eingesetzten, nur im wesentlichen senkrecht zur Rückseitenanlagefläche gegen eine vorbestimmte Haltekraft abnehmbaren, vorzugseise versenkt angeordneten Klebeplatte (113) befindet, wobei die Haftkraft geringer als die Klebkraft zischen dem Gegenstand (11) und der Klebeplatte (113) bzw. dem Unterteil (111) und der Wand (12) ist.

11. Durch Halter getragener Gegenstand nach Anspruch 10, dadurch gekennzeichnet, dass die erste Selbstklebeschicht (13) an der Wandanlagefläche (121) in zwei im Abstand voneinander angeordnete kreisförmige Bereiche unterteilt ist.

12. Durch Halter getragener Gegenstand nach Anspruch 10 oder 11, dadurch gekennzeichnet, dass die kreisförmig ausgebildete, in eine dazu komplementär ausgebildete Vertiefung (123') eingesetzte Klebeplatte (113) an dem Abstützbereich (111a) derart lösbar befestigt ist, dass die Klebeplatte (113), wenn sie nach unten gehalten wird, von selbst nicht herausfällt, sich jedoch von dem Abstützbereich (111a) löst, wenn der mit der zweiten Selbstklebeschicht (122) verklebte Gegenstand (11) abgehoben wird.

13. Durch Halter getragener Gegenstand nach Anspruch 12, dadurch gekennzeichnet, dass die Klebeplatte (113) auf der von der Selbstklebeschicht (122) abgewandten Seite einen zentralen Zapfen (114) aufweist, der in eine entsprechende Bohrung (115) des Abstützbereiches (111a) eingreift und vorzugsweise bis zu dem die erste Selbstklebeschicht (13) tragenden Klebeband (116) reicht und an dieses über die auf der betreffenden Seite vorhandene zusätzliche Klebeschicht (13') angeklebt ist.

14. Durch Halter getragener Gegenstand nach einem der Ansprüche 2 bis 13, dadurch gekennzeichnet, dass das Schraubenloch (120) in einer axial herausnehmbaren Reduzierbuchse (124) vorgesehen ist.

## 1. Claims

1. A method of attaching articles (37, 117) to a wall (12) by means of at least one holder (11; 111, 112) which can be fixedly screwed to the wall (12) and by which the article (37,117) is held, wherein the holder (11; 111, 112) is secured to the wall (12) by means of a bared self-adhesive layer and then screwed tight, whereupon the article (37, 117) is mounted on the holder (11; 111, 112), characterised in that the holder or holders (11; 111, 112) is (are) first provisionally fixed to the article (37, 117) or articles (37, 117) in the final position; in that the baring of the self-adhesive layer(s) (13) then takes place; in that the article (37,117) with the holders (11; 111, 112) which are provisionally secured thereto is then brought into the predetermined position on the wall (12); and in that the article (37, 117) or articles (37, 117) is (are) then removed from the holders (11;111,112) which remain adhered to the wall (12) before screwing the holders (11; 111, 112) tight and before mounting the article (37, 117) on the holder (11; 111, 112).

2. An article (37, 117) carried by holders (11; 111, 112) which are to be secured to a wall (12) by means of securing holes for carrying out the method of claim 1, wherein the holders (11; 111, 112) have at the wall contact surface one or more covered self-adhesive layers, which can however be bared, by means of which they can be adhered to the wall (12) with a predetermined adhesive strength, characterised in that the article (37, 117) can be connected with the holders (11; 111, 112) in the final relative position so that it is non-displaceable in all directions parallel to the wall contact surface (121), but can be released from the holders (11; 111, 112) in a direction perpendicular to the wall contact surface (121) with a force which is lower than the bonding force between the holders (11; 111, 112) and the wall (12).

3. An article carried by holders in accordance with claim 2, characterised in that the self-adhesive layer (13) is formed on an adhesive tape (116) which is adhesive on both sides with a thin foam material carrier (127) arranged between the adhesive layers (13, 13'), which is preferably only 0.3 to 0.6 mm thick; and in that the adhesive tape (116) is adhered into recesses (123) in the wall contact surface (121) from which it projects somewhat outwardly beyond the wall contact surface (121).

4. An article carried by holders in accordance with claims 2 or 3 in the form of a fitting (37), such as a hand grip, a handtowel rail or the like with at least one, preferably several and in particular two securing end parts which have sockets which are open at the wall end and extend substantially at right angles to the wall and wherein pedestals (11) which can be screwed to the wall (12) are arranged in the sockets as holders to which the securing end parts can be secured by securing means (21, 22, 23, 24) after being pushed over the pedestals, characterised in that the pedestals (11) are provided with the self-adhesive layer (13) at their wall contact surface (121) and in that the securing means (21, 22, 23, 24) can be released to such an extent that the fitting (37) can be removed from the pedestals (11) perpendicular to the wall contact surface (121) with a lower force than the bonding force between the pedestals (11) and the wall (12).

5. An article carried by holders in accordance with claim 4, characterised in that the pedestals (11) contain nails (14), in particular steel nails, which extend substantially perpendicular to the wall contact surface (121), which are longer than the pedestals (11) and which project from the end face (15) remote from the wall contact surface (121), but which are guided in the pedestal (11) via a long guide part.

6. An article carried by holders in accordance with claim 4 or claim 5, characterised in that the pedestals (11) are sub-divided into an upper part (11a) and a lower part (11b), with the self-adhesive layer (13) being provided on the lower part (11b); in that preferably the lower part (11b) has a larger bore (16) for a wall plug and the upper part (11a) a screw hole (17) of smaller diameter aligned therewith; and in that the securing means (21, 22, 23) for the fitting (37) are arranged on the upper part (11a) of the pedestal.

7. An article carried by holders in accordance with claims 5 and 6, characterised in that the nails (14) are arranged in the lower part (11b) and project before being driven in into reception channels (19) of the upper part (11a).

8. An article carried by holders in accordance with one of the claims 4 to 7, characterised in that an axially extending tongue (28) and groove (29) connection is provided between the securing end parts (27) and the pedestal (11).

9. An article carried by holders in accordance with one of the claims 4 to 8, characterised in that the pedestal (11), or the lower part (11b) has a conically broadened portion (31) of relatively low depth at the side facing the wall (12); and in that the securing end part (27) has at the end an inner recess (32) which is complementary thereto.

10. An article carried by holders in accordance with claims 2 or 3 in the form of a plate; for example a mirror, which is supported by holders in the form of lower parts (111) which have a wall contact surface (121), which can be secured to the wall (12) and which have at least one screw hole which is directed substantially perpendicular to the wall contact surface (121), and upper parts which can be mounted on the lower part (111), characterised in that the wall contact surface (121) is provided at least partially with the self-adhesive layer (13); and in that the rear contact surface (10) of the lower part (111) provided for the plate (117) is at least partly formed by a second self-adhesive layer (122) which is located on an adhesive plate (113) which is releasably inserted into the support region (111a) of the lower part (111), which is preferably arranged in countersunk manner and which can only be removed substantially at right angles to the rear side contact surface against a predetermined retaining force, with the retaining force being lower than the bonding force between the article (11) and the adhesive plate (13) or between the lower part (111) and the wall (12).

11. An article carried by holders in accordance with claim 10, characterised in that the first self-adhesive layer (13) at the wall contact surface (121) is sub-divided into the two spaced apart circular regions.

12. An article carried by holders in accordance with claims 10 or 11, characterised in that the circular adhesive plate which is inserted into a recess (123') of complementary shape is so releasably secured to the support region (111a) that the adhesive plate (113) does not fall out of its own accord when held downwardly but releases from the support region (111a) when the article (11) which is adhered with the second self-adhesive layer (112) is lifted away.

13. An article carried by holders in accordance with claim 12, characterised in that the adhesive plate (113) has a central spigot (114) on the side remote from the self-adhesive layer (122) with the spigot engaging in a corresponding bore (115) of the support region (111a) and preferably extending up to the adhesive tape (116) which carries the first self-adhesive layer (13) and being adhered to the latter via the additional adhesive layer (13') provided on the relevant side.

14. An article carried by holders in accordance with one of the claims 2 to 13, characterised in that the screw hole (120) is provided in an axially removable reducing sleeve (124).

## Revendications

1. Procédé de fixation d'objets (37, 117) à un mur (12) au moyen d'au moins un support (11; 111, 112) qui peut être bloqué par vissage contre le mur (12) et par lequel l'objet (37, 117) est retenu, procédé dans lequel le support (11; 111, 112) est fixé au mur (12) par l'intermédiaire d'une couche auto-adhésive mise à nu, puis est bloquée par vissage, après quoi l'objet (37, 117) est installé sur le support (11; 111, 112), caractérisé par le fait que le ou les supports (11; 111, 112) sont tout d'abord fixés provisoirement à l'objet (37; 117) ou aux objets (37, 117) dans la position définitive; par le fait qu'on met ensuite à nu la ou les couche(s) auto-adhésive(s) (13); par le fait que l'objet (37, 117) et les supports (11; 111, 112) qui y sont provisoirement fixés sont ensuite amenés à la position prédéterminée contre le mur (12); et par le fait qu'ensuite, avant le blocage du support (11; 111, 112) par vissage et la mise en place de l'objet (37, 117) sur ce support (11; 111, 112), l'objet (37; 117) ou les objets (37, 117) sont enlevés de supports (11; 111, 112) continuant d'adhérer au mur (12).

2. Objet (37, 117) porté par des supports (11; 111, 112) devant être fixés à un mur (12) au moyen de trous de fixation, pour la mise en œuvre du procédé selon la revendication 1, les supports (11; 111, 112) comportant, sur la surface de contact avec le mur, une ou plusieurs couches auto-adhésives (13) qui sont recouvertes, peuvent cependant être dénudées et au moyen desquelles ils peuvent être collés au mur (12) avec une force d'adhérence prédéterminée, caractérisé par le fait que l'objet (37, 117) peut être relié aux supports (11; 111, 112) dans la position relative définitive, parallèlement à la surface (121) de contact avec le mur et sans faculté de mouvement de toutes parts, mais peut cependant être enlevé des supports (11; 111, 112), dans la direction perpendiculaire à la surface (121) de contact avec le mur, avec une force moins grande que la force d'adhérence des supports (11; 111, 112) au mur (12).

3. Objet porté par des supports selon la revendication 2, caractérisé par le fait que la couche auto-adhésive (13) est ménagée sur une bande (116) adhésive sur ses deux faces avec un mince support en mousse (127) qui est intercalé entre les couches adhésives (13, 13') et dont l'épaisseur n'est de préférence comprise qu'entre 0,3 et 0,6 mm; et par le fait que la bande adhésive (116) est collée dans des renfoncements (123) dans la surface (121) de contact avec le mur, en faisant légèrement saillie vers l'extérieur au-delà de cette surface (121) de contact avec le mur.

4. Objet porté par des supports selon la revendication 2 ou 3, sous la forme d'une armature (37) telle qu'une poignée de retenue, une tringle à serviettes ou objet analogue présentant au moins une, de préférence plusieurs et en particulier deux pièces extrêmes de fixation qui s'étendent sensiblement perpendiculairement au mur (12), comportent une cavité réceptrice ouverte vers ce mur (12) et dans lesquelles sont disposés des tenons (11) vissables au mur (12) et faisant office de supports et auxquels les pièces extrêmes de fixation peuvent être assujetties, après leur enfilement, par des moyens de fixation (21, 22, 23, 24), caractérisé par le fait que les tenons (11) sont munis de la couche auto-adhésive (13) sur leur surface (121) de contact avec le mur, et les moyens de fixation (21, 22, 23, 24) peuvent être desserrés de telle sorte que l'armature (37) puisse être enlevée des tenons (11), perpendiculairement à la surface (121) de contact avec le mur, avec une force moins grande que la force d'adhérence des tenons (11) au mur (12).

5. Objet porté par des supports selon la revendication 4, caractérisé par le fait que les tenons (11) renferment des pointes (14), en particulier des pointes d'acier, qui s'étendent sensiblement perpendiculairement à la surface (121) de contact avec le mur, qui sont plus longues que le tenon (11) et dépassent de la face frontale (15) tournée à l'opposé de la surface (121) de contact avec le mur en étant toutefois guidées, dans le tenon (11), par l'intermédiaire d'un organe de guidage plus long.

6. Objet porté par des supports selon la revendication 4 ou 5, caractérisé par le fait que les tenons (11) sont subdivisés en une partie supérieure (11a) et en une partie inférieure (11b), la couche auto-adhésive (13) étant prévue sur la partie inférieure (11b); par le fait que de préférence la partie inférieure (11b) et la partie supérieure (11a) présentent respectivement un perçage large (16) pour une cheville et un perçage (17) pour une vis, aligné avec ledit perçage et ayant un diamètre plus faible; et par le fait que les moyens (21, 22, 23) de fixation de l'armature (37) se trouvent sur la partie supérieure (11a) du tenon.

7. Objet porté par des supports selon les revendications 5 et 6, caractérisé par le fait que les pointes (14) sont logées dans la partie inférieure (11b) et s'engagent, avant leur enfoncement, dans des logements récepteurs (19) ménagés dans la partie supérieure (11a).

8. Objet porté par des supports selon l'une des revendications 4 à 7, caractérisé par le fait qu'une liaison par rainure (28) et languette (29), s'étendant axialement, est prévue entre les pièces extrêmes de fixation (27) et le tenon (11).

9. Objet porté par des supports selon l'une des revendications 4 à 8, caractérisé par le fait que le tenon (11) ou respectivement sa partie inférieure (11b) présente, du côté tourné vers le mur (12), un évasement tronconique (31) de profondeur relativement modeste, et la pièce extrême de fixation (27) possède intérieurement, à son extrémité, un évidement (32) complémentaire dudit évasement.

10. Objet porté par des supports selon la revendication 2 ou 3, sous la forme d'une plaque, par exemple d'un miroir, qui est en appui grâce à des parties inférieures (11) pouvant être fixées au mur (12), comportant une surface (121) de contact avec ce mur et percées d'au moins un trou pour une vis ménagé sensiblement perpendiculairement dans ladite surface (121) de contact avec le mur, ainsi qu'à des parties supérieures faisant fonction de supports et pouvant être montées sur la partie inférieure (111), caractérisé par le fait que la surface (121) de contact avec le mur est pourvue au moins partiellement de la couche auto-adhésive (13) et la surface (10) de la partie inférieure (111), prévue pour le contact avec la face postérieure de la plaque (117), est constituée au moins en partie par une seconde couche auto-adhésive (122) qui se trouve sur une plaquette adhésive (113) incorporée amoviblement dans la zone d'appui (111a) de la partie inférieure (111), occupant de préférence une position encaissée et ne pouvant être arrachée, pour l'essentiel, que perpendiculairement à la surface en contact avec la face postérieure, à l'encontre d'une force de retenue prédéterminée, cette force de retenue étant moins grande que la force d'adhérence entre l'objet (11) et la plaquette adhésive (113) ou bien entre la partie inférieure (111) et le mur (12).

11. Objet porté par des supports selon la revendication 10, caractérisé par le fait que la première couche auto-adhésive (13) est subdivisée, sur la surface (121) en contact avec le mur, en deux régions circulaires situées à distance l'une de l'autre.

12. Objet porté par des supports selon la revendication 10 ou 11, caractérisé par le fait que la plaquette adhésive (113), de configuration circulaire et insérée dans un renfoncement (123') de configuration complémentaire, est fixée amoviblement, dans la zone d'appui (111a), de manière que cette plaquette adhésive (113) ne tombe pas d'elle-même lorsqu'elle est retenue vers le bas, mais qu'elle se détache de la zone d'appui (111a) lorsque l'objet (11) collé à la seconde couche auto-adhésive (122) est enlevé.

13. Objet porté par des supports selon la revendication 12, caractérisé par le fait que la plaquette adhésive (113) comporte, du côté tourné à l'opposé de la couche auto-adhésive (122), une cheville centrale (114) qui pénètre dans un trou correspondant (115) de la zone d'appui (111a) et s'étend de préférence jusqu'à la bande adhésive (116) portant la première couche auto-adhésive (13), en étant collée à cette bande par l'intermédiaire de la couche adhésive supplémentaire (13') prévue du côté considéré.

14. Objet porté par des supports selon l'une des revendications 2 à 13, caractérisé par le fait que le trou (120) pour une vis est prévu dans une douille de réduction (124) pouvant être extraite axialement.

0 058 405

FIG. 1

FIG. 2

15

# FIG. 3

# FIG. 4

FIG. 5

FIG. 6

0 058 405

FIG. 7

112    112

117

112    112

FIG. 8

112

111

12

117

111

112

FIG. 9

12

112    117    112

21

# FIG. 10

# FIG. 11

# FIG. 12

# FIG. 13

## FIG. 14

112a

136

112

137

## FIG. 15

112a

112

136

137

137

137

## FIG. 16

## FIG. 17

## FIG. 18

FIG. 19

0 058 405

## FIG. 20

## FIG. 21

## FIG. 22

FIG. 23

# FIG. 24